# EUROPEAN PATENT APPLICATION

(11) **EP 2 682 850 A1**
(43) Date of publication of application: **08.01.2014**
(21) Application number: 12175171.3
(22) Date of filing: 05.07.2012
(51) Int. Cl.: G06F 3/048, H04M 1/725

(54) **PRIORITIZATION OF MULTITASKING APPLICATIONS IN A MOBILE DEVICE INTERFACE**

(71) Applicant: BlackBerry Limited, Waterloo, ON N2K 0A7 (CA)
(72) Inventor: Moore, Shannon Tyler, Waterloo, Ontario N2L 3W8 (CA); Griffin, Jason Tyler, Waterloo, Ontario N2L 3W8 (CA)
(74) Representative: Moore, Barry

(57) **Abstract**

An activity screen or multitasking screen for a mobile device includes a plurality of tiles, each of which corresponds to a different multitasking application on the mobile device. Each of the tiles is allocated to a distinct region on the activity screen, according to a specified layout. The layout may vary according to the number of tiles allocated in the activity screen, and in some examples a region of the activity screen is automatically subdivided to provide additional regions. The content displayed for each tile is selected, at least in part, based on the size of the allocated region, and consequently, of the tile. Content for each possible size of the tile can be pre-defined. Each of the tiles operates as an application entry point for its corresponding application, thus providing a means of access for applications concurrently executing on the device.

## Description

### Technical Field

The present disclosure relates to display and management of executing applications on a mobile device.

### Technical Background

Mobile computing device platforms, such as tablet computers or smartphones, are typically subject to physical limitations that less portable computing platforms, such as desktop computing platforms, are not. Mobile devices, for instance, typically have a smaller form factor; as a result of this and battery life considerations, the mobile device may be equipped with fewer processing resources and less memory compared to contemporary desktop or laptop computers. The reduced physical size may also limit the variety of user interface options available for controlling the mobile device: mobile devices are provided with smaller physical keyboards than desktop or laptop computers, or may have no keyboard at all; and the mobile device's smaller display screen restricts the volume of information that can be simultaneously displayed to the user while still being legible.

Despite their potentially reduced processing ability mobile devices may be configured to perform some degree of multitasking or simulated multitasking, enabling the user to switch between open applications. However, the reduced screen size of the typical mobile device may impede the user in locating and switching from application to another.

### Brief Description of the Drawings

In drawings which illustrate by way of example only embodiments of the present disclosure, in which like reference numerals describe similar items throughout the various figures,

FIG. 1 is a block diagram of an example of an electronic device such as a mobile device.

FIG. 2 is an illustration of an example homescreen displayed on the mobile device of FIG. 1.

FIG. 3 is a schematic illustration of interaction of the homescreen of FIG. 2 and individual application screens displayable on the mobile device.

FIG. 4 is an illustration of a further example homescreen including an activity screen.

FIG. 5 is a schematic illustration of interaction of the homescreen of FIG. 4 and the individual application screens.

FIG. 6 is a schematic illustration of interaction between applications executing on the mobile device, a screen engine, and a homescreen engine.

FIGS. 7A to 7G are schematic illustrations of an activity screen during addition of applications to the screen.

FIGS. 8A to 8C are schematic illustrations of an alternative activity screen layout.

FIGS. 9A to 9E are further schematic illustrations of alternative activity screen layouts.

FIG. 10 is a set of schematic illustrations of graphics for use with the activity screens of FIGS. 7A through 9E.

FIG. 11 is a flowchart illustrating a method of adding or removing applications to or from an activity screen.

FIG 12 is a flowchart illustrating a further method of adding applications to an activity screen.

FIGS. 13A to 13C are schematic illustrations of an activity screen displayed on a mobile device in which an open application is dismissed.

FIGS. 14A and 14B are schematic illustrations of an activity screen displayed on a mobile device in which priority of displayed applications is reordered.

FIG. 15 is a flowchart illustrating a method of updating an activity screen.

### Detailed Description of the Invention

The examples and embodiments described herein provide a device, system and methods for presenting, accessing and prioritizing multitasking applications in a user interface (UI). These examples may in particular be implemented on mobile devices adapted to execute applications in a fullscreen mode, and also those implementing a homescreen mode for providing access to applications.

These embodiments will be described and illustrated primarily in relation to mobile electronic devices, such as tablet computers, smartphones, or any other suitable electronic device provided with sufficient user interface mechanisms as will be understood by those skilled in the art from the following description. It will be appreciated by those skilled in the art, however, that this description is not intended to limit the scope of the described embodiments to implementation on mobile or portable devices, or on tablets or smartphones in particular. For example, the methods and systems described herein may be applied to any appropriate communication device or data processing device adapted with suitable user interface mechanisms, whether or not the device is adapted to communicate with another communication or data processing device using a network communication interface adapted to communicate over a fixed or wireless connection, whether provided with voice communication capabilities or not, and whether portable or not. The device may be additionally or alternatively adapted to process data and carry out operations on data in response to user commands for any number of purposes, including productivity and entertainment. In some examples, data may be accessed from a different device. Therefore, the examples described herein may be implemented in whole or in part on electronic devices including without limitation cellular phones, smartphones, wireless organizers, personal digital assistants, desktop computers, terminals, laptops, tablets, e-book readers, handheld wireless communication devices, notebook computers, portable gaming devices, tabletop displays, Internet-connected televisions, set-top boxes, digital picture frames, digital cameras, in-vehicle entertainment systems, entertainment devices such as MP3 or video players, and the like.

In the primary examples described herein, the electronic device includes an integrated touchscreen display; however, it will be readily understood by those skilled in the art that a touchscreen display is not necessary. In some cases, the electronic device may have an integrated display that is not touchscreen-enabled. In other cases, the electronic device (whether it possesses an integrated display or not) may be configured to output data to be painted to an external display unit such as an external monitor or panel, tablet, television screen, projector, or virtual retinal display (via a data port or transmitter, such as a Bluetooth® transceiver, USB port, HDMI port, DVI port, and the like). For such devices, references herein to a "display," "display screen" or "display interface" are intended to encompass both integrated and external display units.

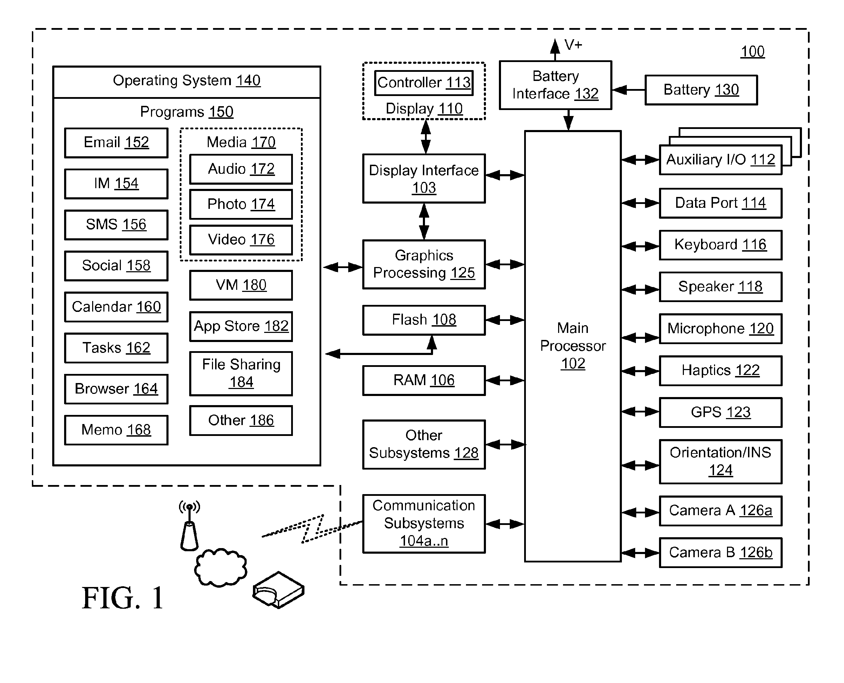

FIG. 1 is a block diagram of an example of a portable electronic device 100 that may be used with the embodiments described herein. It should be understood that the components described in FIG. 1 are optional and that an electronic device used with various embodiments described herein may include or omit components described in relation to FIG. 1. The electronic device 100 includes a number of components such as a main processor 102 that controls the device's overall operation. Other processors or components can be included for functions not explicitly detailed herein, such as power management and conversion, encoding and decoding of audio and other data, and the like. Those skilled in the part will appreciate that such components, if present, are not illustrated here for ease of exposition.

The electronic device 100 may be a battery-powered device, having a battery interface 132 for receiving one or more batteries 130. Alternatively or additionally, the electronic device 100 may be provided with an external power supply (e.g., mains power, using a suitable adapter as necessary). If configured for communication functions, such as data or voice communications, one or more communication subsystems 104a..n in communication with the processor are included. Data received by the electronic device 100 can be received via one of these subsystems and decompressed and/or decrypted as necessary using techniques and components known to persons of skill in the art. The communication subsystems 104a..n typically include a receiver, transmitter, and associated components such as one or more embedded or internal antenna elements, local oscillators, and a digital signal processor in communication with the transmitter and receiver. The particular design of the communication subsystems 104a..n is dependent upon the communication network with which the subsystem is intended to operate.

For example, data may be communicated to and from the electronic device 100 using a wireless communication subsystem 104a over a wireless network. In this example, the wireless communication subsystem 104a is configured in accordance with one or more wireless communications standards. New wireless communications standards are still being defined, but it is believed that they will have similarities to the network behaviour described herein, and it will also be understood by persons skilled in the art that the embodiments described herein are intended to use any other suitable standards that are developed in the future. The wireless link connecting the wireless communication subsystem 104a with the wireless network represents one or more different Radio Frequency (RF) channels, operating according to defined protocols specified for the wireless communications standard, and optionally other network communications.

The electronic device 100 may be provided with other communication subsystems, such as a wireless LAN (WLAN) communication subsystem 104b or a short-range and/or near-field communications subsystem 104c. The WLAN communication subsystem 104b may operate in accordance with a known network protocol such as one or more of the 802.11™ family of standards developed or maintained by IEEE. The communications subsystems 104b and 104c provide for communication between the electronic device 100 and different systems or devices without the use of the wireless network, over varying distances that may be less than the distance over which the communication subsystem 104a can communicate with the wireless network. The subsystem 104c can include an infrared device and associated circuits and/or other components for short-range or near-field communication.

It should be understood that integration of any of the communication subsystems 104a..n within the device chassis itself is optional. Alternatively, one or more of the communication subsystem may be provided by a dongle or other peripheral device (not shown) connected to the electronic device 100, either wirelessly or by a fixed connection (for example, by a USB port) to provide the electronic device 100 with wireless communication capabilities. If provided onboard the electronic device 100, the communication subsystems 104a..n may be separate from, or integrated with, each other.

The main processor 102 also interacts with additional subsystems (if present), the general configuration and implementation of which will be known to those skilled in the art, such as a Random Access Memory (RAM) 106, a flash memory 108, a display interface 103 and optionally a display 110, other data and memory access interfaces such as a visualization (graphics) processor 125, auxiliary input/output systems 112, one or more data ports 114, a keyboard 116, speaker 118, microphone 120, haptics module 122 (e.g., a driver and a vibratory component, such as a motor), GPS or other location tracking module 123, orientation and/or inertial navigation system (INS) module 124, one or more cameras, indicated at 126a and 126b and other subsystems 128. In some cases, zero, one or more of each of these various subsystems may be provided, and some subsystem functions may be provided by software, hardware, or a combination of both. For example, a physical keyboard 116 may not be provided integrated with the device 100; instead a virtual keyboard may be implemented for those devices 100 bearing touch screens, using software components executing at the device. Additional display interfaces 103 or displays 110 may be provided, as well as additional dedicated processors besides the visualization processor 125 to execute computations that would otherwise be executed by the host processor 102. Additional memory or storage modules, not shown in FIG. 1, may also be provided for storing data, which can contain flash memory modules as well. Examples include non-volatile memory cards such in the microSD and miniSD formats defined by the SD Association, San Ramon, California. Such storage modules may communicate with the mobile device 100 using a fixed or wireless connection.

A visualization (graphics) processor or module 125 may be included in the electronic device 100. The visualization module 125 analyzes and processes data for presentation via the display interface 103 and display 110. Data originally prepared for visualization on a large-screen display may require additional processing prior to visualization on a small-screen display. This additional processing may be accomplished by the visualization module 125. As will be appreciated by those of skill in the art, the visualization module can be implemented in hardware, software, or a combination thereof, and can include a dedicated image processor and associated circuitry, or can be implemented within main processor 102. Rendered data for painting to the display is provided to the display 110 (whether the display 110 is external to the device 100, or integrated) via the display interface 103.

Content that is rendered for display may be obtained from a document such as a message, word processor document, webpage, or similar file, which is either obtained from memory at the device such as flash memory 108 or RAM 106, or obtained over a network connection. A suitable application, such as a messaging application, viewer application, or browser application, or other suitable application, can process and render the document for display in accordance with any formatting or stylistic directives included with the document. FIG. 1 illustrates possible components of the device 100, such as the operating system 140 and programs 150, which can include zero, one or more applications such as those depicted. Other software components 190 besides those explicitly illustrated in FIG. 1 can also be included, as is well known to those skilled in the art. Programs 150 may be installed on the device 100 during its manufacture or together with loading of the operating system 140, or at a subsequent time once the device 100 is delivered to the user. These software applications may be supplied by the device manufacturer or operating system provider, or may be third party applications. The additional applications can be loaded onto the device 100 through at least one of the communications subsystems 104a..n, the data port 114, or any other suitable device subsystem 128.

Example applications include an email messaging application 152, as well as other types of messaging applications for instant messaging (IM) 154 and Short Message Service (SMS 156). Other applications for messaging can be included as well, and multiple applications for each type of message format may be loaded onto the device 100; there may be, for example, multiple email messaging applications 152 and multiple instant messaging applications 154, each associated with a different user account or server. Alternatively different applications may be provided to access the same set of messages or message types; for example, a unified message box function or application may be provided on the device 100 that lists messages received at and/or sent from the device, regardless of message format or messaging account. Other applications include social networking applications 158, which may provide messaging function, a content reader function, or both; browser applications 164; calendar applications 160, task applications 162 and memo applications 168, which may permit the user of the device 100 to create or receive files or data items for use in personal organization; media applications 170, which can include separate components for playback, recording and/or editing of audio files 172 (including playlists), photographs 174, and video files 176; virtual machines 180, which when executing provide discrete runtime environments for other code on the device 100; "app store" applications 182 for accessing vendor sites offering software applications for download (and optionally for purchase) to the device 100; direct or peer-to-peer file sharing or synchronization applications 184 for managing transfer of files between the device 100 and another device or server such as a synchronization or hosting service, using any suitable protocol; and other applications 186. Applications may store data in the device's file system; however, a dedicated data store or data structure may be defined for each application.

In some examples, the electronic device 100 may be a touchscreen-based device, in which the display 110 includes a touchscreen interface that provides both a display visual presentation of data and graphical user interfaces, and an input subsystem for detecting user input via a graphical user interface presented on the display 110 that may be converted to instructions for execution by the device 100. A display 110 that is a touchscreen may be the principal user interface provided on the electronic device 100, in which case other user input mechanisms such as the keyboard 116 may not be present, although in some examples, a keyboard 116 and/or additional buttons, a trackpad or other user interface mechanisms may still be provided.

Generally, user interface (UI) mechanisms may be implemented at the electronic device 100 as hardware, software, or a combination of both hardware and software. Graphical user interfaces (GUIs), mentioned above, are implemented using the display interface 103 and display 100 and corresponding software executed at the device. Touch UIs are implemented using a touch sensing mechanism, such as the aforementioned trackpad and/or touchscreen interface, along with appropriate software used to convert touch information to signals or instructions. A voice or speech UI can be implemented using the microphone 120, together with modules implemented in hardware or software operable to detect speech patterns or other sounds, and to decode or correlate detected sounds to user commands. A tracking (e.g., eye-tracking or facial tracking) UI or perceptual UI can be implemented using the camera 126a and/or 126b, again with appropriate hardware and/or software modules to analyze received visual data to detect the presence or position of a user's face or eyes, which are used to derive commands or contextual information to control device operations. A kinetic UI can be implemented using the device's orientation/INS module 124, or using the GPS module 123 or another locating technology module, together with appropriate software and/or hardware modules to detect the motion or position of the electronic device 100, again to derive commands or contextual information to control the device. Generally, the implementation of touch, voice, tracking/perceptual, and kinetic UIs will be understood by those skilled in the art.

In touchscreen embodiments, the display controller 113 and/or the processor 102 may detect a touch by any suitable contact member on the touch-sensitive display interface 110 (references to the "display 110" herein include a touchscreen display, for those electronic devices implemented with touchscreen interfaces). The configuration of the touchscreen display and display controller for detecting touches will be known to those skilled in the art. As only one example, the touchscreen display may be a capacitive touchscreen display with a capacitive touch-sensitive overlay having multiple layers including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO). Optionally, haptic or tactile feedback can be provided by the haptics module 122 in response to detected touches received through the touchscreen display, either through the housing of the device 100, or through the touchscreen itself. The touchscreen sensors may be capable of detecting and supporting single-touch, multi-touch, or both single and multi-touch actions such as tap, double-tap, tap and hold, tap and drag, scroll, press, flick and pinch. A touchscreen enabled to detect only single-touch input is able to accurately identify only one point of contact on the display at a time. A multi-touch touchscreen is able to accurately identify two or more simultaneous contacts on the screen. The touchscreen display 110 detects these single and multi-touch actions, for example through the generation of a signal or signals in response to a detected contact, which may then be processed by the processor 102 or by an additional processor or processors in the device 100 to determine attributes of the touch event, such as the location of the touch action, whether defined by horizontal and vertical screen position data or other position data. The detected touch actions may then be correlated both to user commands and to an element or elements displayed on the display screen or view presented by the display 110. In response to the user command, the processor may take actions with respect to the identified element or elements. Touches that are capable of being detected may be made by various contact objects, such as thumbs, fingers, appendages, styli, pens, pointers and the like, although the selection of the appropriate contact object and its construction will depend on the type of touchscreen implemented on the device.

The orientation/INS module 124 can include one or more motion or tilt sensors capable of detecting gravity- or motion-induced forces to determine physical conditions of the device such as acceleration and angular velocity, which in turn can be used to determine the orientation or geometric attitude of the mobile device 100, or changes thereto, in two or three dimensions. Motion sensors can include an accelerometer for detection of linear motion, and a gyroscope for detection of rotational motion. The selection and implementation of suitable motion sensors will be understood by those skilled in the art.

Although not shown in FIG. 1, the electronic device 100 may also include one or more proximity sensors which can be used to determine distance of the device 100 from a surface. An example of a proximity sensor is a radiation sensor for detecting reflected radiation, such as infrared light, from a nearby surface. Such a sensor may typically be used in conjunction with voice or video communication functions on the device 100 to determine when the user is present in front of or in close proximity to the display 110.

Possible network topologies for use with the device 100 will be known to those skilled in the art. As only one example, a host system may be provided, which can be an own-premises local area network (LAN), or wide area network in communication with LANs, with local computing resources such as one or more servers, data repositories and client devices such as terminals. The host system may comprise those components necessary to provide services to users over the LAN and also over a public or private network, such as the Internet, at their respective devices 100. The services can include but are not limited to messaging, directory services, collaborative applications, calendaring applications, search engines and file servers. The device 100 could access the host system using one or more of its communication subsystems 104a..n, for example through an access point, via the public or private network, and optionally via a public switched telephone network and a wireless network.

As mentioned above, the typically smaller form factor of mobile devices (as compared to larger devices such as personal desktop or laptop computers) results in reduced size of the device's integrated display and greater challenges in presenting an effective graphical UI and options for physical interaction (via a touchscreen, pointing device, etc.). At the same time, although the overall storage capacity of a mobile device may not rival the capacity of a contemporary laptop or desktop computer, the mobile device may have just as many-or more-application programs and different types of data as a laptop or desktop computer. Given the easy availability of thousands of mobile device applications from online "app stores" and other distributors for modest cost, users of mobile devices may collect a large number of applications for their tablets and smartphones. It is therefore desirable to provide an effective means for the user to access specific applications or data of interest easily, without expending too much of the user's time-and the device's processing resources or battery life-locating the desired application or data. It should be noted, however, that although focus is directed to mobile devices such as tablets or smartphones, it will be understood by those skilled in the art that the examples and embodiments presented herein can be implemented on desktop or laptop computers as well as other non-mobile computing devices.

In view of the often-limited processing power and smaller screen size of the mobile device, UI design on mobile devices has adopted some, but not necessarily all, elements of the desktop metaphor used for decades in personal computing. Applications available on a mobile device tend to be presented using icon representations arranged on a simple "homescreen" display containing arrays of icons representing the various applications. The homescreen can be considered to be a landing page or initial view of the mobile device's graphical UI much in the way the "desktop" is the initial view of the graphical UI of a personal computer executing an operating system presenting a windowed environment. As in the desktop environment, each icon comprises a graphical UI element associated with an entry point for its corresponding application, and actuation of the icon (e.g., by "clicking" or "tapping" on the icon, or otherwise invoking a user interface event associated with the icon using a touch UI, pointing device, keyboard or other user input mechanism) results in launch of the application, if the application is not already executing, and presentation of the application UI to the user according to the entry point identified by the icon. If the application is already executing, which may be the case in a multitasking or quasi-multitasking operating system, then the application UI is presented to the user in its most recently updated state.

In this description, the meaning of "application" will be understood by those skilled in the art as meaning a software program distinct from the device operating system, generally directed to the accomplishment of a specific task or tasks, and including one or more components for interaction with a user. Typically the application includes at least one user interface for receiving user input, providing output or feedback to the user, or both. Given the great dependence on graphics UIs in current mobile and personal computing environments, an application typically includes a graphical application UI for presentation to the user via the display 110. In these examples, this UI is referred to as the application "screen".

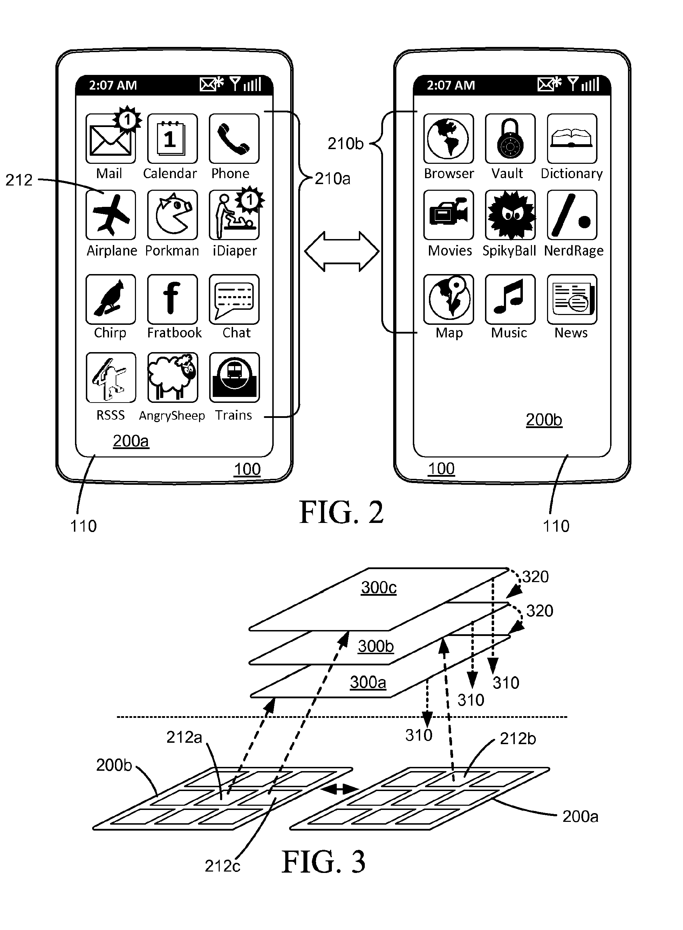

An example homescreen in a mobile device 100 with an integrated display 110 is shown in FIG. 2. It will be readily understood that the example mobile devices illustrated in the accompanying figures omit a number of details that are not necessary for understanding or enablement of the embodiments described herein. For example, the mobile device 100 shown in FIG. 2 may be a touchscreen-based device, employing a touchscreen as the primary user interface mechanism. Such a mobile device 100 often includes additional input mechanisms such as buttons or switches, which are not illustrated in the accompanying drawings but are not intended to be excluded by their omission.

A first screen 200a of a homescreen is shown in FIG. 2. The screen (which may also be referred to as a "view") includes one or more icons, such as icon 212. In the example of FIG. 2, the first screen 200a fills the entirety of the available display area of the display. Optionally, the homescreen can include a banner or ribbon or other UI element in which status or environmental information can be displayed, such as the current time, currently joined network(s), signal strength, indicators of receipt of new messages, and so forth. An operating system process executing in the background can update the information displayed in the banner. The arrangement of such UI elements and homescreens generally will be known to those skilled in the art.

A number of icons are arranged in an array 210a in the screen 200a. In some examples, the icons may be arranged in a predetermined order, such as alphabetically, in order of addition to the homescreen, or in order of frequency of use; the order may alternatively be user-defined. Again, the configuration of icons in homescreens will be known to those skilled in the art. In some cases, the screen 200a may be the sole screen within the homescreen, and when there are too many icons to be displayed simultaneously within the currently displayable area of the homescreen, the user may need to scroll through the icons within the homescreen to view currently non-visible icons. In other examples, though, the homescreen (which may still be scrollable) is extendible to one or more other screens, such as screen 200b also shown in FIG. 2. The other screens may also include one or more icons corresponding to applications installed on the mobile device 100, here shown again in an array 210b. Icons and their associated files are typically provided when an application or the operating system is installed or provisioned on the mobile device 100, and when the application is deleted from the mobile device 100, the corresponding icon is removed from the homescreen. As will be seen in these examples, other graphical UI files can also be provided with the application when it is installed or provisioned.

The homescreen illustrated in FIG. 2 can thus be considered to be a multi-screen or multi-view homescreen. Navigation from one screen to another in a multi-screen homescreen can be executed using techniques known in the art, such as touch gestures (for touchscreen devices), scrolling with a pointing device, activation of next/previous page UI elements, and so on. In the case of a touchscreen device, for example, directional navigation gestures (e.g. swipe gestures towards the left or right side of the screen, or towards the top or bottom) may be interpreted as instructions to transition to the next adjacent screen as determined by the direction of the gesture. The transition from one screen to another may simply involve drawing the next screen on the display 110, or may include visual effects such as a slide effect (in which the current view is animated to appear to be sliding out of view at one side of the display 110, and the next view appears to slide in at the opposite side). A multi-screen homescreen can include the first screen 200a, and optionally a second screen 200b, or even more than two such screens displaying application icons. In some examples, the homescreen can include a further screen or screens presenting other information, such as a notification screen listing recent events detected at the mobile device 100 (e.g., new messages received) or a search screen enabling the user to input search strings and search the data stored on the mobile device 100. These notification screen and search screen functions are often provided as features of the operating system.

If the mobile device is adapted for multitasking, then more than one application may be launched without a previously launched application being terminated, and consequently more than one screen may be maintained in memory. How multitasking is accomplished, however, varies according to the device operating system and the device's processing and memory capabilities. Techniques for implementing multitasking and sharing resources among applications in mobile computing environments will be known to those in the art; it is sufficient for the purpose of these examples to note that "multitasking" applications, in this context, includes "true" multitasking in which applications can execute unrestricted in the background; limited multitasking in which applications may register a thread with limited functionality and resources to run in the background; and simulated multitasking, where applications enter a suspended or inert state in which application data is maintained in memory, but execution of the application processes or threads is halted when the mobile device 100 returns to the homescreen mode or another application is invoked. Examples of limited multitasking in mobile devices can include music and media applications, which can continue to play music or sound files in the background while the user is engaged with another application in the foreground; and messaging and "push" data applications, which can continue to listen for new messages or data pushed to the mobile device 100, and issue notifications to the user via a UI mechanism when new data is received. "True" multitasking or limited multitasking applications may considered to be "live", in that they can continue to dynamically present information to the user even when executing in the background, as in these examples of messaging and media applications. In all cases, the operating system may manage the resources consumed by the multitasking applications, for example by terminating applications that do not change state or use their allocated resources within a specified period of time, or by limiting multitasking applications to a certain number and terminating the oldest or least frequently accessed application when a further application is launched.

When the mobile device 100 is in a homescreen mode, one of the screens 200a, 200b, etc. of the homescreen is displayed in the display 110, and input navigation commands are interpreted as instructions to change the displayed view to a different screen of the homescreen. To exit the homescreen mode and change the view to an application screen, the corresponding icon on the homescreen can be actuated, as described above. Once launched, a single application may generate more than one screen to be stored in device memory for presentation to the user. For example, in the case of a messaging application, the application may generate a first screen showing a message inbox listing, a second screen showing a message listing for a selected thread of the message inbox listing, and a third screen showing message content of a selected message of that thread. When the application is executing in the foreground, one of its screens is displayed to the user, and the same navigation commands applied in the homescreen mode may have different results when invoked in the application.

To return to the homescreen mode, the user may actuate a "home" button or other input mechanism (not shown), select a menu option, or invoke a "home" command in some other fashion. If the mobile device 100 is capable of multitasking, the device 100 may then save the current application state, screen and associated data in memory for later retrieval. Similarly, screens of other applications, and the various screens 200a, 200b, etc. of the homescreen, may be maintained in memory at the mobile device 100 for retrieval. Maintaining the screens in memory is not mandatory, but it can assist in reducing response time when the user switches between an application and homescreen mode, since the screen can be retrieved from memory and output to the display 110 without waiting for the application or operating system to re-render the appropriate screen.

FIG. 3 provides a schematic illustrating the interrelationship between the homescreen screens 200a, 200b and various applications, each represented by a corresponding screen 300a, 300b, 300c. As illustrated in FIG. 3, actuation of a first icon 212a in the homescreen invokes a first application, generating first application screen 300a. A return to the homescreen mode and display of one of the screens of the homescreen can be accomplished as described above. In the meantime, though, as other applications are launched in response to actuation of other icons 212b, 212c, additional corresponding application screens 300b, 300c are generated as well. In some mobile device operating system implementations, the various screens 200a, 200b, 300a, 300b, 300c are maintained in memory in a stack arrangement; the screen "on top" of the stack, that is to say, the most recently invoked or added screen, is the one that is currently displayed by the mobile device 100. When the application is closed or terminated, its screen is popped off the stack, and the next screen in the stack is displayed. Management of the screens can be handled by a screen engine or manager implemented in the device operating system.

When the mobile device 100 is executing a number of multitasking applications, the user would likely wish to be able to access one or all of them from time to time, even briefly to check the current status of the application. In the "stack" example of FIG. 3, it can be seen that there are at least two ways for the user to switch from one application to another. In one method, he or she can invoke the "home" command to return to the homescreen, as indicated by arrows 310. From the homescreen, the user can then locate the appropriate icon, then access the application via the corresponding icon 212a, 212b, 212c. This process does require the user to spend time looking for the correct icon, which may not be readily visible; it may be located on a non-visible portion of the screen 200a or 200b, or the user may need to move to a different screen 200b or 200a to locate the icon, thus consuming device resources to simply locate an icon. Alternatively, the user could dismiss (close or terminate) the various executing applications until the correct application screen reaches the top of the stack, as indicated by arrows 320. This option, of course, requires the user to terminate processes that he or she may not have wished to, simply to locate another application. Re-activation of the terminated application would then consume additional device resources, and may consume more resources than simply suspending operation of the application and resuming it later.

Optionally, the mobile device operating system may implement task switcher functionality, which permits a task switcher UI to be invoked to permit the user to select a different multitasking application. Typically, the task switcher UI is an overlay UI element containing icons representing each current multitasking application, and optionally other favorite applications, that can be invoked using a simple input (e.g., a menu option, keystroke combination, or menu button press). The task switcher UI, however, typically does not include particularly robust information, as it consists of icons and optionally alert indicators (e.g., a graphical indication superimposed on a messaging application icon indicating that a new unread message has been received), but not actual application data content. Furthermore, if the application the user seeks is not actually included in the task switcher (for example, if it was terminated earlier, or was not executing at all), then the task switcher must be dismissed, and the device must return to the homescreen mode anyway so that the user can locate and invoke the appropriate icon. An example of a task switcher is provided in United States Patent Application No. 13/154,743 filed 7 June 2011.

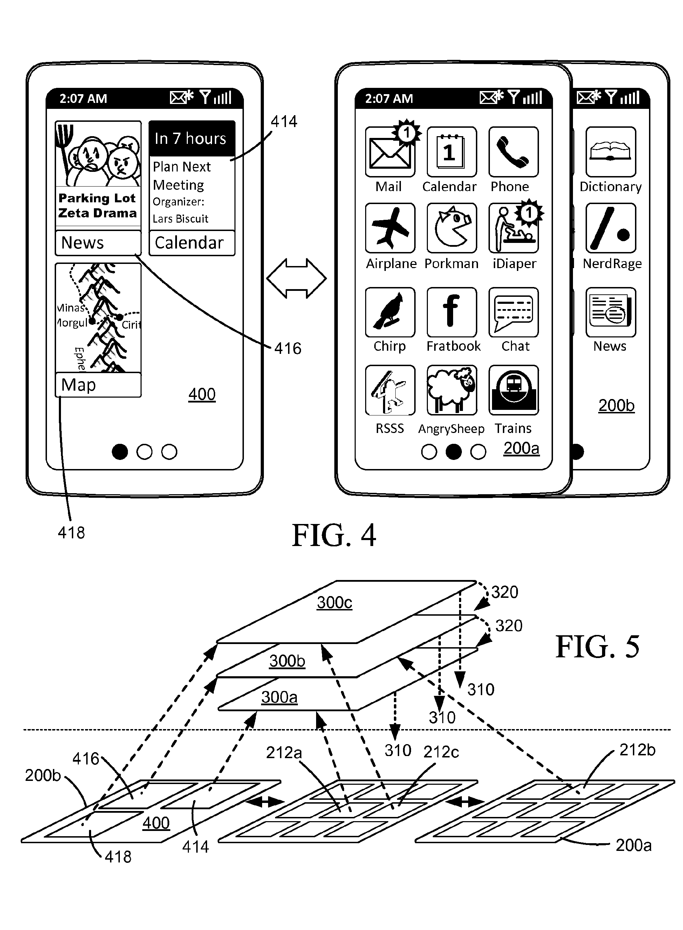

Accordingly, an activity screen or multitasking screen is provided. A non-limiting example of such an activity screen 400 is shown in FIG. 4. Briefly, the activity screen comprises a plurality of tiles, each of which corresponds to a different one of the multitasking applications on the mobile device 100. Each of the tiles is allocated to a distinct region on the activity screen, according to a specified layout. The layout may vary according to the number of tiles allocated in the activity screen. The content displayed for each tile is selected, at least in part, based on the size of the allocated region (i.e., tile). Content for each possible size of the tile can be pre-defined. Each of the tiles operates as an application entry point for its corresponding application, thus providing another means of access for applications concurrently executing on the device.

The activity screen 400 can be included within the homescreen, as shown in FIG. 4; using the navigation commands discussed above, the user may navigate to and display the activity screen 400 while in the homescreen mode, and while any multitasking applications are executing in the background. The activity screen includes at least one pane or tile representing a multitasking application on the device 100. In the example screen 400, three such tiles 414, 416, 418 are shown. The tile can contain a predefined graphic associated with the application, as discussed below. In some cases, the tile can be populated with dynamic content obtained by the application, as in the example of the calendar tile 414, which displays details of the next upcoming calendar event obtained by a corresponding calendar application, and can be updated to replace these details with those of a further event once the first event has expired; and in the example of the news title 416, which displays an image and text pushed to the mobile device 100 (or "pulled" to the mobile device 100 in response to a transmitted request) and received by the corresponding news application executing on the device 100.

The activity screen provides a further means for accessing a multitasking application on the mobile device 100, as illustrated schematically in FIG. 5. FIG. 5 adds the further homescreen component, activity screen 400 bearing tiles 414, 416 and 418, to the set of homescreen screens 200a, 200b. Each of these tiles is associated with an entry point for its corresponding application and can be actuated in a manner similar to an icon on one of screens 200a, 200b to invoke the corresponding application 300a, 300b, 300c.

Thus, the activity screen 400 not only provides a "shortcut" or graphical UI access to each application executing on the device, but also provides more detailed information obtained from that application (as shown in FIG. 4), without requiring the device to leave the homescreen mode in order to retrieve the application data. The type of application data that can be provided in the tiles displayed on the activity screen 400 may be as numerous as the number of distinct applications executing on the device. Application data can include calendar event information from a calendar data store as demonstrated by tile 414; push notification data, such as news text, and images retrieved over a network, as shown in tile 416; information about a media file currently being played; data from a location-based service; weather data from a weather service delivered to a specialized application on the device; social posts, messages and updates, which can include any appropriate type of content, such as text and images.

Since, in these examples, the activity screen 400 is included in the set of homescreen views already including screens 200a, 200b, and since display of the activity screen 400 occurs in the homescreen mode, the same navigation command used to change the display of one homescreen view 200b to another screen 200a can be used to change the display from screen 200a to 400. Because dynamic information can be provided on the activity screen, the need to invoke the corresponding application and bring it to the foreground in processing-thereby consuming more device energy, memory and processing resources-is reduced.

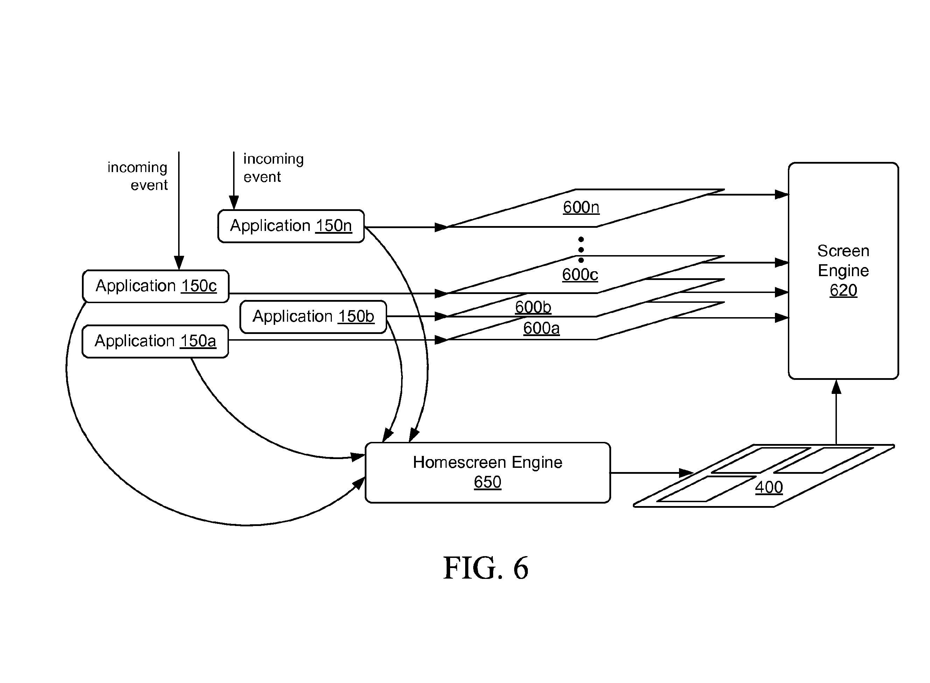

FIG. 6 illustrates the interrelationship between the various executing applications, the homescreen, and the screen engine managing the stack of application screens and homescreens. Each of applications 150a..n, when executing in a multitasking environment, generates a corresponding application screen 600a..n. The number n of executing applications at a given time is limited by the device operating system and the device's processing capabilities. For example, n may be set at a fixed number; this value may be completely arbitrary, or informed by considerations such as the average amount of resources consumed by a typical application. In other examples, n may not be preset, but may instead be determined by current processor and memory usage.

The various application screens 600a..n are stored in memory and are managed by a screen engine 620_{,} which sends the current screen to the display 110. When the applications are launched, or when an incoming event is detected by a currently-running application, a homescreen engine or manager 650, which may be separate from the screen engine 620 or integrated with the screen engine 620, is notified. The homescreen engine 650 manages the layout of the activity screen 400, which in turn is provided to the screen engine 620 for management within the display stack.

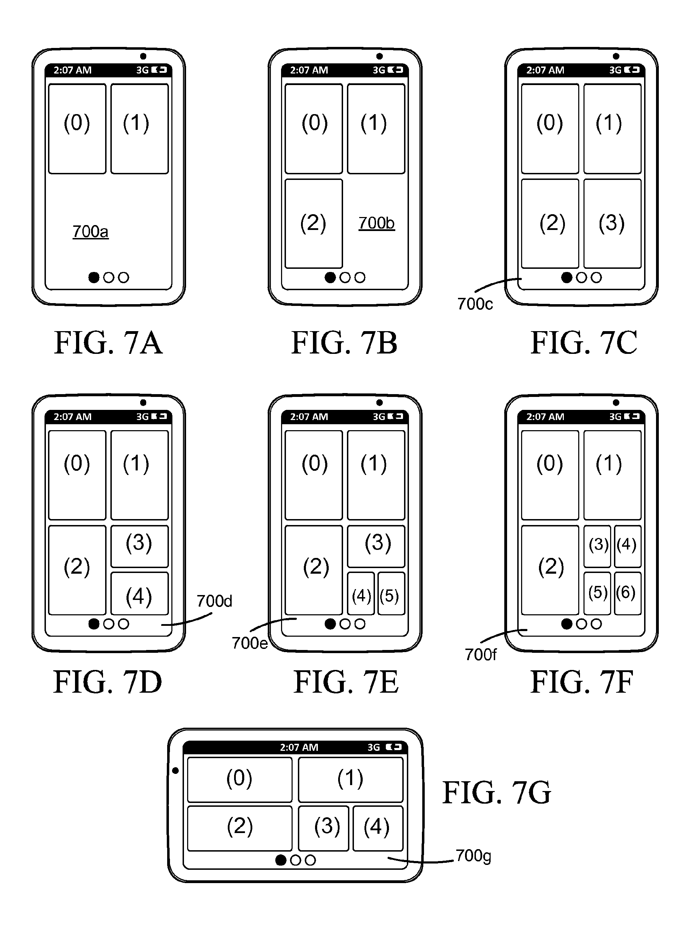

The example activity screen 400 in FIG. 4 includes only three tiles, representing three separate applications, since in that example only three applications were executing. In some examples, not every executing application is represented on the activity screen. Some applications may be excluded from display on the activity screen. Regardless, the layout of the activity screen may be configured to balance accessibility against available display area, as in the example illustrated in FIGS. 7A to 7F.

FIGS. 7A to 7F illustrate a sequence of possible activity screen layouts. In a first activity screen, 700a of FIG. 7A, the layout is notionally divided into four regions that substantially fill the area of the activity screen available for display of tiles (subject to considerations such as borders and padding in the screen design). The available area may be the entire displayable area of the display 110, or may be only a portion thereof; portions of the screen may be given over, for instance, to a banner or other user interface chrome (i.e., standard graphical user interface features, such as the banner, navigation aids, etc.). The regions in this example all have the same dimensions and may be arranged in a regular grid formation, although these are not mandatory requirements; as will be seen in FIGS. 7D to 7F, discussed below, the layout may evolve beyond this initial grid arrangement to include regions of different sizes.

The first activity screen 700a in this example includes only two regions to which tiles have been allocated, designated with indices o and 1 (referred to below as "region" or "position" o or 1). The index value represents the order of priority or presentation on the activity screen, i.e., the order in which tiles are allocated to regions in the activity screen as corresponding applications are launched on the mobile device 100. In some implementations, when no application is executing, or only one application eligible for representation as a tile on the activity screen is executing, no activity screen is generated or maintained within the homescreen. In other examples not illustrated, when one eligible application is executing, the activity screen is included in the homescreen either with only a single tile at index o, or with a fullscreen or reduced size display of the application screen. In the layout of screen 700a, the two tile regions with index o and 1 have a first size and have specified positions shown within the activity screen 700a, namely, in the upper portion of the display, leaving room for two further tiles of the same size beneath. The size of the tiles can be determined according to display 110 size and other physical considerations.

When a third application is launched, its tile can be allocated to position 2 in the layout, which has the same size as o and 1, as shown on activity screen 700b of FIG. 7B. Similarly, when a fourth application is launched as shown on the screen 700c of FIG. 7C, its tile is allocated to position 3, having the same size as o, 1 and 2. Thus, in the example of activity screens 700a, 700b, and 700c, the layout is substantially divided into quadrants, with one quadrant of the activity screen allocated to each of tile regions o, 1, 2, 3. It will be understood by those skilled in the art that the proportions of the regions in the layout may vary according to design considerations, and that in some examples each quadrant need not be the same size, or exactly as depicted in the accompanying drawings, which are not necessarily to scale.

At this point, the activity screen 700c is full, since there is no further room for a complete tile in the available space in the activity screen layout. In these examples, the activity screen is designed to include the tiles for each multitasking application within the displayable area of the display 110, rather than requiring the user to scroll or pan through tiles not immediately visible onscreen. However, if the mobile device 100 is capable of executing further multitasking applications, additional tiles may be displayed in the activity screen by reducing the size of previously added tiles. In some examples, a number of layouts, one for each possible arrangement of regions accommodating any number of tiles up to the maximum number of tiles that can be displayed on the activity screen, are predefined and stored at the mobile device 100. Thus, layouts defining the positions and sizes of regions o to 1, o to 2, and o to 3 as depicted in FIGS. 7A to 7C are stored and retrieved as necessary depending on the number of multitasking applications to be represented by tiles on the activity screen. Additional layouts are also predefined and stored and so on to accommodate five, six, and seven tiles, as depicted in FIGS. 7D to 7F, are also stored and retrieved as necessary. The layouts of FIGS. 7D to 7F are described in further detail below. Once a selected layout has been retrieved, tiles are then allocated to the regions in the selected layout, and the activity screen can then be rendered for display.

In other examples, once the number of multitasking applications has exceeded a threshold number and further tiles are to be added to the activity screen, tile regions are resized dynamically by an iterative process applied to a base layout design. For example, in FIGS. 7A to 7F it is presumed that the device 100 is capable of executing at least seven multitasking applications, or at least, that a limit of seven multitasking applications will be represented in the activity screen. Turning to FIG. 7D, a fifth application has been launched. Since a tile has already been allocated to each existing region in the layout 700c of FIG. 7C, one of the regions is selected for subdivision. In activity screen 700d in FIG. 7D, the selected region is the one to which a tile was most recently allocated, which is region 3. The layout is therefore altered by splitting region 3 in two, so as to accommodate a further region with index 4 such that regions 3 and 4 occupy the space previously occupied by region 3 in FIG. 7C. The tiles allocated to regions 3 and 4 are therefore reduced in size to a second size; each are now approximately half the size of previous region 3, again subject to considerations such as margins or padding, which may result in the area of new regions 3 and 4 not being exactly one-half of previous region 3 in FIG. 7C. Since the region with index 3 has now been resized, a new tile for the application associated with that index must now be allocated, or else the previously allocated tile must be resized to fit the new region size and shape. The activity screen is then re-rendered with the new layout.

When a sixth application is launched as in FIG. 7E, region 4 is selected for subdivision to provide new regions 4 and 5 in activity screen 700e, occupying the area previously occupied by previous region 4. Regions 4 and 5 are now approximately one-quarter of the original size of region 3 in FIG. 7C as a result of a second-degree division of original region 3. In this example, this is the minimum size that may be allocated to a tile; thus, in FIG. 7E, there are tiles of three sizes: the first original (largest) size, which is the size of the tiles allocated to current regions o, 1 and 2; the second (intermediate) size of region 3; and the third (minimum) size of regions 4 and 4. The selection of the minimum size, again, may vary according to a number of factors. Display size and design, for example, may be used to determine an appropriate minimum tile size for display by the mobile device 100, while the device's multitasking capabilities will determine the number of multitasking applications that may require representation on the activity screen.

Finally, when the seventh (and last, in this example) multitasking application is launched, the layout is further updated to include a seventh and final tile region (index 6) on the activity screen 700f, as shown in FIG. 7F. Previously, when the fifth and sixth tiles were allocated to the activity screen, the most region most recently allocated a tile was subdivided to provide two smaller regions to accommodate the most recently-allocated tile and the new tile for the new multitasking application. However, because regions 4 and 5 in FIG. 7E were already reduced to the minimum size, the iterative process selects the next most recently allocated region, region 3, to be subdivided instead. Thus, in the updated layout shown in FIG. 7F, the position of region 4 has been altered to be adjacent to region 3, and regions 5 and 6 are positioned below 3 and 4.

In the example of FIG.s 7A to 7F, once the four regions defined in the base layout are filled, the layout is only modified by subdividing the fourth region of the base layout as necessary to accommodate additional application tiles. The choice to divide a previously allocated region horizontally into upper and lower subdivisions (as in the case of region 3 of FIG. 7C being divided into regions 3 and 4 in FIG. 7D), or vertically into left and right subdivisions (as in the case of region 4 of FIG. 7D being divided into regions 4 and 5 in FIG. 7E) may be determined by the proportions of the region to be subdivided. If the region to be subdivided is taller than it is wide, then it may be split horizontally; and if the region is wider than it is tall, it may be split vertically. FIG. 7G illustrate, in contrast to the layout 700d of FIG. 7D, a further variant of the five-tile activity screen as it might be laid out on a mobile device display 110 in a landscape orientation, where the two smaller regions (3) and (4) are created by a vertical split of the larger region previously occupying that space in the layout.

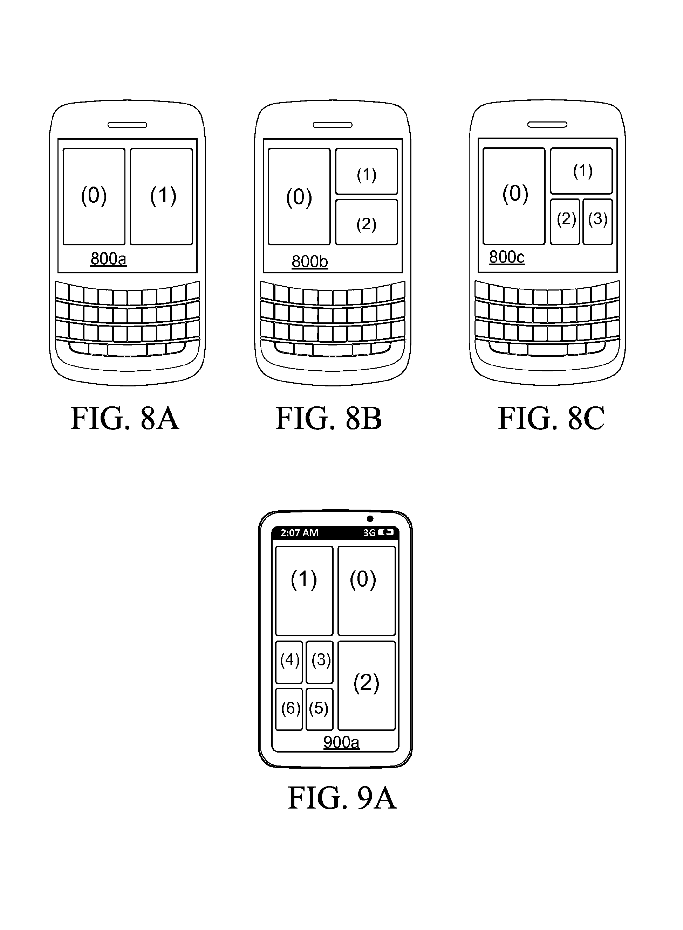

FIGS. 8A to 8C illustrate another example of activity screen layout on a mobile device 100 having a lower maximum number of multitasking applications. In this example, the activity screen 800a starts with two tile regions o and 1, as in the example of FIG. 7A. However, these two tile regions consume substantially all available space available in the activity screen layout; accordingly, when a third application is added, the second region 1 is subdivided into two further regions 1 and 2, shown in activity screen 800b of FIG. 8B. When a further application is launched, as in FIG. 8C, the last region added, region 2, is subdivided to provide two smaller regions, 2 and 3. Thus, activity screen 800c accommodates up to four application tiles as opposed to the seven of FIG. 7F. The layout of FIG. 8C could be further subdivided to accommodate further application tiles.

It will be noted that in these examples, tiles are allocated to the right and towards the bottom of the activity screen as applications are launched according to the specified index order. Thus, the tile for the longest-running application will be located at position o, unless an intervening action causes the tile to be moved to a different region in the activity screen layout or dismissed from the activity screen. The tile corresponding to the most recently launched or accessed application will be positioned in the region closest to the lower-right hand corner. This order of allocating tiles in the layout regions generally follows a Western-style reading direction, as tiles are generally filled in a left-to-right, top-to-bottom order. This fill order may be selected since it may be familiar to the user when using the activity screen. Also, on a touchscreen-based device (particularly a smartphone), this position corresponds to that part of the display 110 that is typically within easiest reach of the user's right thumb. Thus, when the activity screen is invoked on the mobile device 100, those users who tend to hold the device 100 so that it is resting on the fingers of their right hand can easily select the tile of one of the more recently-launched applications with the right thumb without shifting the position of the device 100 in the right hand. This is advantageous to the user when the user is more likely to access the more recently-launched applications, since selection of the tile may be done easily with the user's thumb. The implementation of an activity screen in this manner may reduce consumption of processing resources and memory on the mobile device 100, since tiles in the activity screen may present application information such as dynamically updated information or status information (as discussed below) to the user in a single view without requiring the user to activate a task switcher to select and invoke one of the multitasking applications to obtain this information. Invocation of one of the multitasking applications brings the application into the foreground for execution, thus increasing its share of processor time and memory consumption.

In some implementations, the order of the application tiles is dependent on the frequency with which the applications are invoked and executed in the foreground; thus, in this scheme, the most frequently-accessed multitasking applications will have tiles allocated to regions in the lower-right hand corner of the activity screen, while the least frequently-accessed multitasking applications have tiles in one of the first-allocated regions (e.g., regions o, 1 or 2 in FIGS. 7A to 7F). As a result, the least frequently accessed multitasking applications will be represented by larger tiles that are capable of conveying more information (e.g., dynamically updated information, or application status information, as discussed below) to the user by virtue of their size, while the more frequently accessed applications are within easy reach of the user's thumb. This order of allocation on the activity screen may therefore reduce consumption of processing resources and memory, since it reduces the need for the user to invoke those less frequently accessed applications simply to view the application's status.

It will be appreciated by those skilled in the art that the fill order of the regions in the activity screen and the layout may be altered as desired, for example to assign indices to the regions in accordance with a different reading direction, or a left-handed layout. FIG. 9A illustrates another activity screen 900a with an alternative layout in which the order of the tile regions o to 6 is reversed, such that the further subdivided region is located at the lower lefthand corner. In some embodiments, the user can select a different layout (e.g., right-handed or left-handed) or fill order according to their preference.

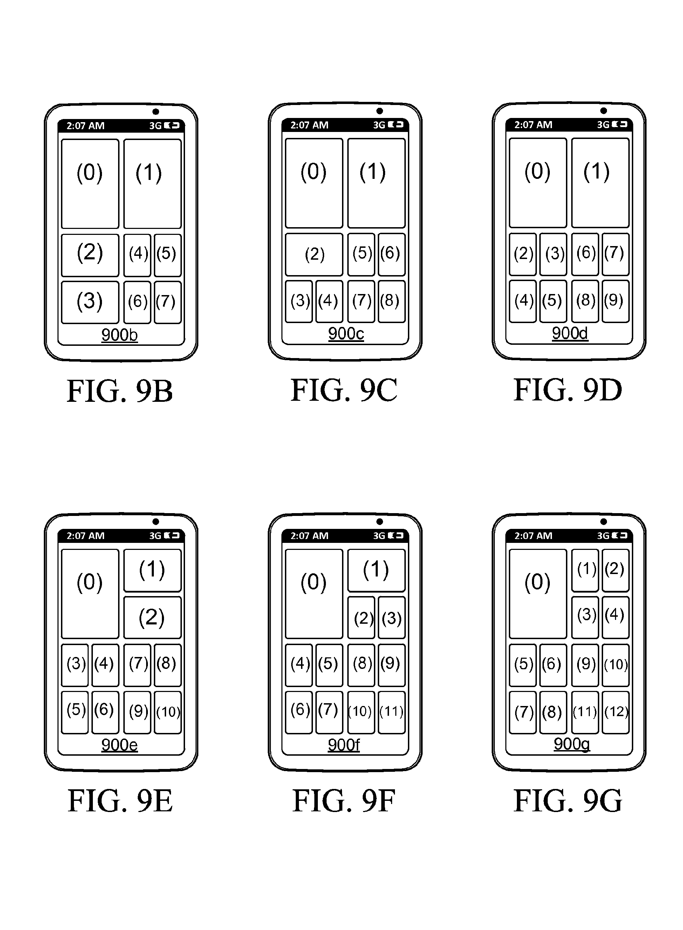

In the example of FIGS. 7A to 7F, the layout imposed a limit of seven application tiles, in which only the most recently filled quadrant (i.e., the "lowest priority" region in the layout of screen 700c, in view of the fill order was further subdivided to accommodate further tile regions as necessary. In some implementations, subdivision of the regions of the base layout can be extended to include other regions so as to accommodate further tiles. FIGS. 9B to 9E illustrate an example continuing from activity screen 700f of FIG. 7F. Because in the last layout of screen 700f the last quadrant of the screen had already been subdivided into four tiles of the minimum size (regions 3, 4, 5, 6 in FIG. 7F), upon launch of an eighth multitasking application a further region is inserted by subdividing the most recently-allocated tile that is greater than minimum size, namely, region 2 in FIG. 7F. The effect of the subdivision is shown in the layout of activity screen 900b in FIG. 9B, in which a further region has been inserted, such that regions 2 and 3 are now set to the intermediate size and occupy the area previously occupied by original region 2 in FIG. 7F.

As additional regions are inserted into the layout, the position and size of each region is updated as necessary so as to maintain the general fill order originally specified (left to right, and top to bottom) within each quadrant of the screen, and the newest tile is added to the end of the fill order. Thus, FIGS. 9C and 9D illustrate the further subdivision of the quadrant previously occupied by original region 2 in FIG. 7F. Region 3 in FIG. 9B, which was set at the intermediate size, is resized in the activity screen 9000 FIG. 9C to the third size, and region 4 is repositioned to be adjacent to resized region 3. The remaining regions 5 to 7 are then repositioned as well, and new region 8, also of minimum size to fill the void left by the repositioning of the other regions, added to the last region on the screen 900c. Similarly, when a further multitasking application is launched and a further tile is to be allocated to a region, a further region is inserted by subdividing region 2 of FIG. 9C into two to provide regions 2 and 3, and the remaining regions are repositioned, as shown in activity scree 900d of FIG. 9D. FIGS. 9E, 9F and 9G show the remaining sequence as further multitasking applications are launched, and original region 1 in the upper right-hand quadrant of the activity screen is incrementally subdivided as shown in activity screens 900e, 900f and 900g, respectively. In this example, the initial region o is left undivided; thus, a total of thirteen tiles can be displayed in this example while still filling the entire available space in the activity screen. This example may be extended to subdivide region o, thus providing for up to sixteen applications to be represented in the activity screen. It will be appreciated by those skilled in the art that subdivisions may be made in different proportions, and not necessarily by progressively dividing regions in half as illustrated in these examples. For example, the layout may be based on subdivision into thirds. In other examples, regions may not be subdivided into second-order subdivisions, as in the case of FIGS. 7A to 7G and 9A to 9G, where the smallest tile regions are the result of an original region of the first size being subdivided twice to provide four regions of the third size; each region may be subdivided once only, as in the example of FIGS. 8A to 8C, or in other implementations, more than twice.

The evolving layouts of the activity screens illustrated in FIGS. 7A through 9G provide a balance between application tile size-where larger sizes are preferred, to maximize the amount of legible detail that can be presented to the user-and optimal usage of the available screen space while presenting all tiles concurrently onscreen, without overflowing tiles to another screen or to an unviewed area of the current screen. As additional tiles are added beyond the threshold number of tiles in the base layout (in the examples of FIGS. 7A to 7G and 9A to 9G, four; in the example of FIGS. 8A to 8C, two), the layout is updated to insert further regions while the area of the screen occupied by the regions remains substantially constant, thus optimizing use of the activity screen. By contrast, those skilled in the art will appreciate that the use of a simple grid arrangement without incremental subdivision in this manner (e.g., use of a 2x2, 3x3, 4x4, 3x4, etc., grid arrangement, where each region of the grid remains fixed in size and position) may result in unoccupied space in the activity screen when there are insufficient tiles to fill each available region of the grid.

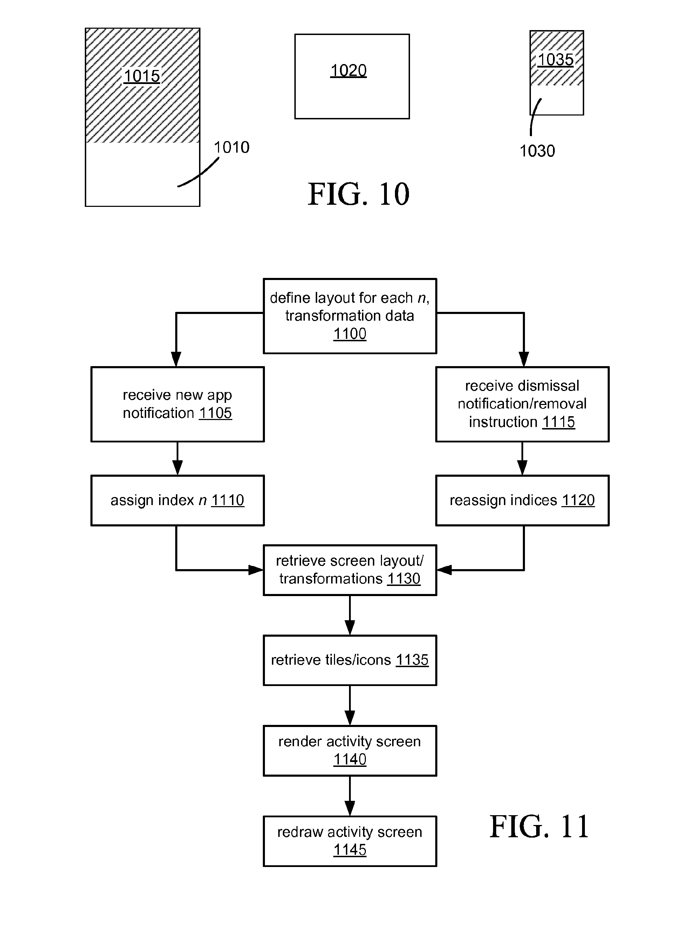

In these examples, the activity screen layouts accommodate three distinct sizes of tiles, each subsequent tile size being approximately half the size of the previous tile size. This is illustrated in the schematics of FIG. 10, which depict tiles of varying sizes 1010, 1020 and 1030; tile 1020 has markedly different proportions to tiles 1010 and 1030, since it typically occupies the full width of a large region, but only half a large region's height. These proportions will vary according to aesthetic considerations; for example, allowance can be made for a border surrounding all tiles, as was the case in FIGS. 7A through 9B.

While select content of the tile can be generated dynamically by the multitasking application, the general format of the tile is expected to be defined by the application developer and provided with the application. The content of each of the tiles 1010, 1020, 1030 for a given application need not be the same. Each of the tiles may comprise static content only, such as a predefined graphic. As contemplated above, data from a "live" application with a thread or process executing in the background may be used to update the tiles; accordingly, only the tile format need be specified for the homescreen manager 650, together with a pointer to the source for the dynamic content to be used to populate the tile. Returning to the example of the activity screen 400 of FIG. 4, the news application tile 414 includes an image and text. The tile definition for the largest size 1010 might therefore include a pointer or address for retrieving the image and text from memory on the device 100 or over a network, as well as layout instructions for rendering the tile 414 with the retrieved content. Similarly, for the second size 1020, the tile definition may include the appropriate pointer or address to retrieve content, and layout instructions as well. The layout will vary from the larger size 1010 since only half the space is available, and the content may vary as well. For example, in the larger size 1010, a retrieved image may be scaled to fit the width of the tile, and the text positioned beneath the image, whereas in the second size 1020, the same scaled image may be used, but the text may be superimposed on the image; or alternatively, only the text may be used in the second size 1020. In some embodiments, the smallest size 1030 may also include dynamic content, but in view of the fact that even less space is available, the application tile may comprise an icon instead. The icon may be static or dynamic as well.

Tiles may also contain static content derived from the application data. Returning again to FIG. 4, tile 418 represents a map application. The image included in the tile 418 may be obtained from a snapshot of the map last viewed on the mobile device 100. Thus, the content of the tile 418 may change each time the application is accessed, since a different map or map position may be viewed, but the content as rendered in the activity screen 400 is static, since the application does not operate to update the content on the activity screen until the next time the application is executed in the foreground. As another example of static content, a still image may be defined as the tile content, in which case the content of the tile may not change each time the application is accessed.

Tiles can also contain dynamic content reflecting a state of the current application, rather than externally-obtained content or user-selected data. For example, in the case of a media player which can continue to play music files while executing in the background, the tile can include an indicator of the current activity of the player (e.g., a "play" symbol if music is playing, a "stop" or "pause" symbol if music is not playing).

Since different mobile devices 100 will have different display dimensions and resolutions, to accommodate a wider range of mobile devices while relieving the developer of some design burden, the first size 1010 can be defined as square in shape (as indicated by shaded region 1015). Square tiles are easily scaled to fit the width or height, as required, of the available tile region; the remainder of the region (i.e., the unshaded area of 1010) can be filled by the homescreen engine 650 with an application identifier, such as a footer with the application name and/or smaller version of the application icon (e.g., similar to the footer "News" in tile 416 of FIG 4). Similarly, the smallest size 1030 can also be defined as a square, as indicated by shaded region 1035. Typically, application icons are designed to fit within a square shape, so a version of the application icon can be used for the smallest size tile. Again, the homescreen engine 650 can fill the remainder of the tile region on the activity screen with an application identifier, such as the application name. The second tile size 1020 can be simply defined to be twice as wide as the third size (or half the height of the first size), and again, when displayed, the bottom portion of the tile region can be filled with the application name or other identifier.

It will be readily appreciated by those skilled in the art that other layout arrangements are possible. Further, if the mobile device 100 is adapted to operate in both landscape and portrait orientation, the device 100 may be configured to apply a similar layout algorithm and redistribute or re-scale the tiles as necessary when the device 100 is rotated to a landscape position, as opposed to the portrait orientation depicted in FIGS. 7A to 9B.

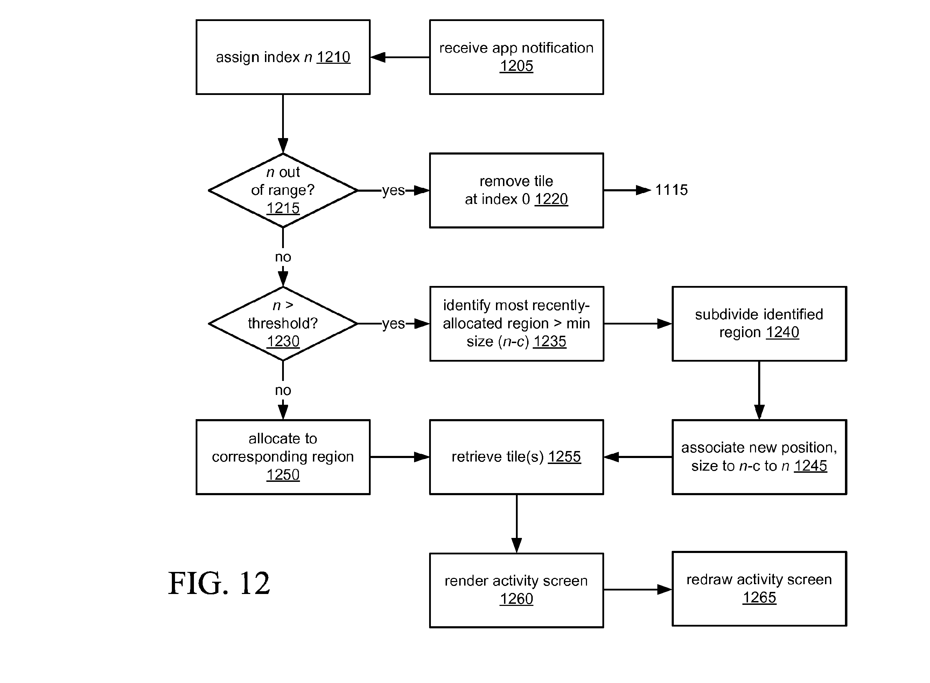

FIGS. 11 and 12 illustrate example methods for populating the activity screen with application tiles. In the method of FIG. 11, each time the tile count changes on the activity screen, fresh tile data is retrieved from each application and the activity screen is redrawn based on a predefined layout for that tile count. At 1100, the layouts are defined for each possible number of multitasking applications n for up to n regions. In addition, transformation data mapping an existing region to a new position and size based on a transition from one layout to another (e.g., the transformation of region 4 between FIGS. 9B and 9C, where the region changes position, or the transformation of region 2 between FIGS. 9D and 9E, where the region changes both size and position) may be defined as well.

When a change is detected by the homescreen engine, indices are added or reassigned to the executing applications. For example, at 1105, the homescreen engine 650 could receive a notification of a new application launch. The notification, which may be received directly from the application itself as illustrated in FIG. 6, may include an application identifier and a pointer to the application's tile data (e.g. tile layout information and addresses for retrieving dynamic data, or static graphic data). In another implementation, the application does not notify the homescreen engine 650 itself, but instead the homescreen engine 650 receives or listens for a device status update from a device status agent (not illustrated) indicating that an application has begun execution. Based on information in the status update, the homescreen engine 650 retrieves application tile data from the application. Upon receipt of the notification or device status update, the homescreen engine defines a tile for the application and assigns an index n to the application, which would be the next available index value within the range of o to l, where *l* is the limit on the number of applications that can be multitasking at a given time.

Alternatively, the homescreen engine 650 may receive at 1115 a notification or device status update indicating that an application has been terminated (dismissed), or may have received, via the activity screen (as described below) an instruction to remove a tile from the screen. The instruction to remove the tile may also invoke a termination instruction to terminate the application. Based on this notification or update, at 1120 the homescreen engine 650 reassigns the indices assigned to the existing application tiles to reflect the fact that one tile has been removed; those application tiles having indices greater than the removed tile's previous index have their indices decremented.

At 1130, the homescreen engine 650 then retrieves the appropriate screen layout according to the greatest in-range index value currently assigned to a tile, as well as any transformation data applying to changes in region position and/or size. Thus, if the last index is 5 and a further application has been launched, the layout accommodating six tiles is retrieved. At 1135, the homescreen engine 650 retrieves the tile or icon data for each application based on the formatting and pointer/address instructions received for each application, and also based on the allocated tile region size for each tile. At 1140, the engine 650 renders the activity screen with the retrieved data according to the layout. Finally, at 1145, the engine 650 sends the rendered screen to be redrawn to the display 110. Redrawing may include displaying a transition effect based on the transformation data (e.g., a visual effect in which a tile appears to slide from its previous position to a new position). This last step would typically not occur until the next time that the activity screen is invoked. The preceding rendering step may also be postponed until the next time the activity screen is invoked.

In a more complex method illustrated in FIG. 12, only those tiles that are added or resized as a result of the launch of a further multitasking application are re-retrieved. At 1205, the notification or device status update is received by the homescreen engine 650. At 1210, a next index n is again assigned to the newest application. If it is determined at 1215 that n is out of range (i.e., there is no further region or subdividable region available on the activity screen for displaying a tile), then at 1220 the lowest-indexed tile-i.e., index o-is removed from the set and the engine carries out a removal process similar to that beginning at 1115. The addition process can thereafter recommence at 1210.

It may be noted, however, that if the device operating system imposes a hard limit on the number of concurrent applications, the operating system will automatically terminate one of the currently multitasking applications when the next application is launched. Accordingly, the homescreen engine 650 will receive a notification that the application has been terminated. The engine 650 may therefore delay briefly before carrying out the addition procedure of FIG. 12 to wait for any application dismissal notifications, so that the removal process of FIG. 11 could be carried out first. Since the newly-launched application is presumably executing in the foreground at this time and that application's screen is likely currently being displayed onscreen, the brief delay in updating the activity screen is unlikely to be perceived by the user.

Assuming that n is not out of range, it is determined at 1230 whether n exceeds a threshold. This threshold identifies a first point where regions must be subdivided in order to accommodate a subsequent tile; thus, in the example of FIGS. 7A to 7F, the threshold value is 3 (since tiles o to 3 can be displayed without subdivision). If n does not exceed the threshold, then at 1250 the tile for the application is allocated to that region, which has an associated position and size according to the base layout defined for the activity screen. If n does exceed the threshold, then at 1235 the homescreen engine 650 identifies the most recently-allocated region in the layout that can still be reduced in size (i.e., the region with the highest index value with a current size greater than the minimum size). In some cases this may be the region with index *n*-1, but in other cases it may be an earlier-allocated region, such as *n*-3. Once this region (referred to as having index n-c) is identified, it is subdivided at 1240, and updated size and position characteristics are associated with it and each of the subsequent regions in the fill order (i.e., of regions of index n-c to n) at 1245, since each of these regions will consequently be altered in position and/or size.

Subsequently, in all cases, the process moves to 1255 where the appropriate tile or icon data is retrieved for the new tile and for those tiles having indices that underwent a change in size. The tile or icon data is therefore selected according to the size associated with the region to which the application tile was allocated. At 1260, the activity screen is rendered with the retrieved data, and subsequently the screen is redrawn at 1265.

In the above examples, the layout of the activity screen imposes a hard limit on the number of application tiles that can be displayed. It will be appreciated by those skilled in the art that this limit is not necessarily the same as the limit on the number of applications that can be executed concurrently on the mobile device.

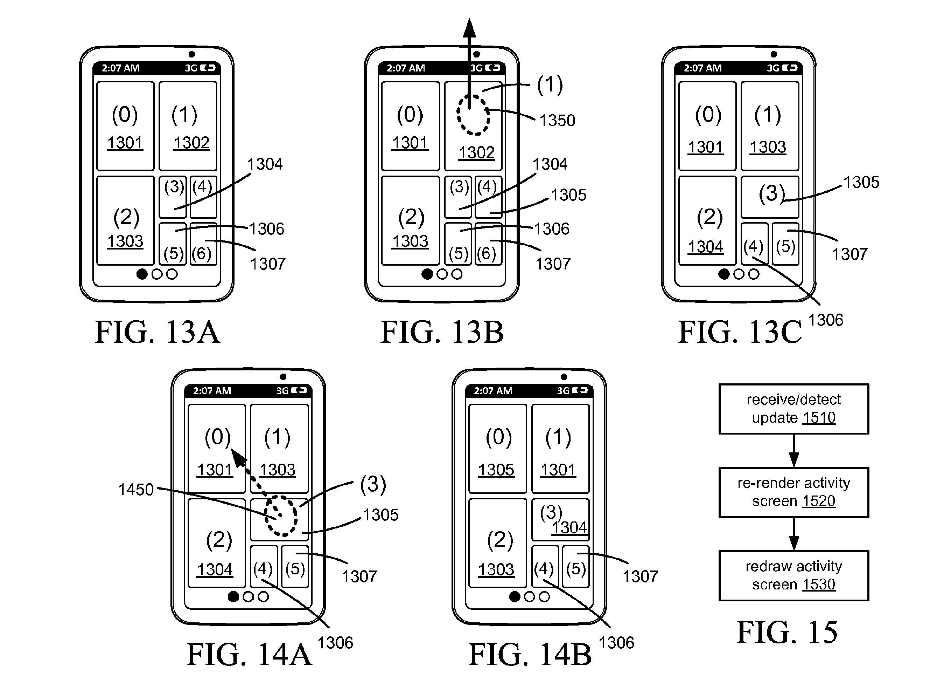

As mentioned above, the homescreen engine 650 can receive an instruction to remove a tile from the activity screen, and this instruction can constitute and instruction to terminate the application as well. FIGS. 13A to 13C illustrate an implementation on a touchscreen device. The first view of FIG. 13A is similar to that of FIG. 7F. A different application tile is allocated to each position, as indicated by 1301..1307. In FIG. 13B, a dismissal gesture, here consisting of a single-finger drag or swipe upwards to the upper boundary of the screen, is illustrated on the tile of application 1302 at position (1) by fingertip outline 1350 and the accompanying arrow. In response to this gesture, the tile for application 1302 is removed, and the remaining tiles 1303..1307 are "promoted" to the next lower index position in FIG. 13C, in the manner described with reference to FIG. 11. In view of the removal of one application tile, the activity screen in FIG. 13C has been re-rendered and redrawn to use the layout corresponding to the new total index count.

Within the activity screen, a tile can be moved or prioritized to the upper-left hand position (index o), which, although it is not necessarily within easy reach of the user's hand holding the device 100, is a prominent position for content visibility on the display. In this example, also implemented on a touchscreen device, a "long press" (a touch that is held for a predefined period of time) is interpreted as a command to "promote" the pressed tile to the o position. FIG. 14A illustrates an activity screen having the same state as FIG. 13C, and shows a long press in the position of fingertip 1450. As a result of the long press, the application 1305 at position 3 is moved to the priority o position (following the direction of the accompanying arrow). The tiles currently at the o, 1 and 2 positions must therefore be "demoted" by increasing their indices to 1, 2 and 3 respectively, and fresh application tile data obtained for positions o and 3 before the activity screen is re-rendered and redrawn as shown in FIG. 14B.

Finally, as mentioned above, the tiles may include dynamic content obtained by the corresponding application executing in the background. FIG. 15 provides an overview of a method for updating the tiles on the activity screen. Notifications or updates may be pushed to the homescreen engine 650 by the application itself, or the engine 650 may register as a listener for new application event notifications. Upon receipt of the notification or update at 1510, the homescreen engine 650 re-renders the activity screen at 1520 with the information received in the notification. The notification may comprise a pointer to new data, in which case the engine 650 retrieves the new data before re-rendering the screen. Subsequently, the next time the activity screen is invoked, the activity screen is redrawn on the display at 1530. Thus, the activity screen, when it dynamically receives application data in this manner, can provide the functions of a notification screen and a task switcher, combined, within the homescreen of the mobile device 100.

Thus, in accordance with the embodiments and examples provided herein, there is provided a method implemented by a mobile device adapted for application multitasking, the method comprising: initially displaying an activity screen comprising a plurality of tiles, each tile corresponding to a different multitasking application on the device, each tile being allocated to a distinct one of a plurality of regions defined in a layout for the activity screen, content for each tile being selected and retrieved for display according to a size of the region to which the tile is allocated; receiving notification of a further multitasking application executing concurrently with the different multitasking applications; allocating a further tile corresponding to the further multitasking application to a next available one of the plurality of regions as defined in the layout; retrieving content for display for the further tile, the content being selected for retrieval according to a size of the region to which the further tile is allocated; and updating the display of the activity screen to include the further tile.

In one aspect, at least one of the plurality of tiles includes dynamic application data obtained by the corresponding multitasking application.

In a further aspect, the method further comprises receiving updated dynamic application data for the at least one of the plurality of tiles; updating the at least one of the plurality of tiles with the updated dynamic application data; and updating the display of the activity screen to include the updated dynamic application data.

In another aspect, the activity screen is comprised in a homescreen display on the mobile device.

In yet another aspect, the homescreen display further comprises at least one screen including a plurality of icons for launching corresponding applications.

In still another aspect, the method comprises, upon receiving the notification of the further multitasking application: updating the layout for the activity screen to reflect a count of the multitasking applications; reallocating each of the plurality of tiles and the further tile to a distinct one of a plurality of regions in the updated layout; retrieving content for display for each tile thus reallocated, the content being selected for retrieval according to a size of the region to which the tile is now allocated; and re-rendering the activity screen for display.

In another aspect, the method further comprises, upon receiving the notification of the further multitasking application: if a count of multitasking applications does not exceed a threshold, carrying out the allocation of the further tile and the retrieval of content for the further tile; and if the count of multitasking applications exceeds the threshold, altering the layout of the activity screen to subdivide the region corresponding to the last allocated tile to provide at least two further regions, the last allocated tile being associated with a first one of the at least two further regions; allocating the further tile to another one of the at least two further regions, said region being the next available one of the plurality of regions; and retrieving content for display for the further tile, the content being selected for retrieval according to a size of said region.

Still further, the initially displayed activity screen may comprise, an initial plurality of regions of a first size, and the method may further comprise, upon receiving the notification of the further multitasking application: if a count of multitasking applications does not exceed a count of the initial plurality of regions, carrying out the allocation of the further tile and the retrieval of content for the further tile; if the count of multitasking applications exceeds the count of the initial plurality of regions, identifying a region corresponding to a most recently-allocated tile having a size greater than a minimum size; subdividing the identified region to provide two further regions; associating updated position and size with the two further regions and any other regions subsequent to the identified region according to a predefined order; and allocating the further tile to a last one of the plurality of regions according to the predefined order; and retrieving content for display for each of the regions having an updated size, the content being selected for retrieval according to the updated size.

In yet another aspect, the size of at least one of the plurality of regions is updated from a larger size to a smaller size.

Still further, content for each tile may comprise content selected from: a snapshot of the multitasking application as last displayed on the mobile device, dynamic application data obtained by the corresponding multitasking application, and an icon.

And still further, content for each tile may comprise content selected from dynamic application data obtained by the corresponding multitasking application, and an icon.

In another aspect, the method further comprises: receiving a notification that a multitasking application has been terminated; removing the corresponding tile from the activity screen; and re-allocating the remaining tiles according to the layout of the activity screen.

Still further, the method may comprise: receiving an instruction to move one of the plurality of tiles to a different region in the activity screen; re-allocating that tile to the different region; and re-allocating remaining tiles to the remaining regions in the layout.

There is also provided a mobile device adapted to implement the methods and variations described herein. In some implementations, the mobile device comprises an integrated touchscreen display. Various steps may be implemented by suitable modules adapted to implement these steps; further, a processor or processors may be configured or adapted to implement the methods and variations described herein.

There is also provided an electronic device-readable medium, which may be physical or non-transitory, bearing code which, when executed by a processor of a mobile device, causes the mobile device to implement the methods and variations described herein.

It should be understood that steps and the order of the steps in the processing described herein may be altered, modified and/or augmented and still achieve the desired outcome. Throughout the specification, terms such as "may" and "can" are used interchangeably and use of any particular term should not be construed as limiting the scope or requiring experimentation to implement the claimed subject matter or embodiments described herein. Further, the various features and adaptations described in respect of one example or embodiment in this disclosure can be used with other examples or embodiments described herein, as would be understood by the person skilled in the art.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits such as custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

A portion of the disclosure of this patent document contains material which is or may be subject to one or more of copyright, design patent, industrial design, or unregistered design protection. The rights holder has no objection to the reproduction of any such material as portrayed herein through facsimile reproduction of the patent document or patent disclosure, as it appears in the Patent and Trademark Office patent file or records, but otherwise reserves all rights whatsoever.

## Claims

1. A method implemented by a mobile device adapted for application multitasking, the method comprising:
initially displaying an activity screen comprising a plurality of tiles, each tile corresponding to a different multitasking application on the device, each tile being allocated to a distinct one of a plurality of regions defined in a layout for the activity screen, content for each tile being selected and retrieved for display according to a size of the region to which the tile is allocated;
receiving notification of a further multitasking application executing concurrently with the different multitasking applications;
allocating a further tile corresponding to the further multitasking application to a next available one of the plurality of regions as defined in the layout;
retrieving content for display for the further tile, the content being selected for retrieval according to a size of the region to which the further tile is allocated; and
updating the display of the activity screen to include the further tile.

2. The method of claim 1, wherein at least one of the plurality of tiles includes dynamic application data obtained by the corresponding multitasking application.

3. The method of claim 2, further comprising:
receiving updated dynamic application data for the at least one of the plurality of tiles;
updating the at least one of the plurality of tiles with the updated dynamic application data; and
updating the display of the activity screen to include the updated dynamic application data.

4. The method of any one of claims 1 to 3, wherein the activity screen is comprised in a homescreen display on the mobile device.

5. The method of claim 4, wherein the homescreen display further comprises at least one screen including a plurality of icons for launching corresponding applications.

6. The method of any one of claims 1 o 5, further comprising, upon receiving the notification of the further multitasking application:
updating the layout for the activity screen to reflect a count of the multitasking applications;
reallocating each of the plurality of tiles and the further tile to a distinct one of a plurality of regions in the updated layout;
retrieving content for display for each tile thus reallocated, the content being selected for retrieval according to a size of the region to which the tile is now allocated; and
re-rendering the activity screen for display.

7. The method of any one of claims 1 to 5, further comprising, upon receiving the notification of the further multitasking application:
if a count of multitasking applications does not exceed a threshold, carrying out the allocation of the further tile and the retrieval of content for the further tile; and
if the count of multitasking applications exceeds the threshold,
altering the layout of the activity screen to subdivide the region corresponding to the last allocated tile to provide at least two further regions, the last allocated tile being associated with a first one of the at least two further regions;
allocating the further tile to another one of the at least two further regions, said region being the next available one of the plurality of regions; and
retrieving content for display for the further tile, the content being selected for retrieval according to a size of said region.

8. The method of any one of claims 1 to 5, wherein the initially displayed activity screen comprises an initial plurality of regions of a first size, the method further comprising, upon receiving the notification of the further multitasking application:
if a count of multitasking applications does not exceed a count of the initial plurality of regions, carrying out the allocation of the further tile and the retrieval of content for the further tile;
if the count of multitasking applications exceeds the count of the initial plurality of regions,
identifying a region corresponding to a most recently-allocated tile having a size greater than a minimum size;
subdividing the identified region to provide two further regions;
associating updated position and size with the two further regions and any other regions subsequent to the identified region according to a predefined order; and
allocating the further tile to a last one of the plurality of regions according to the predefined order; and
retrieving content for display for each of the regions having an updated size, the content being selected for retrieval according to the updated size.

9. The method of claim 8, wherein the size of at least one of the plurality of regions is updated from a larger size to a smaller size.

10. The method of any one of claims 1 to 9, wherein content for each tile comprises content selected from: a snapshot of the multitasking application as last displayed on the mobile device, dynamic application data obtained by the corresponding multitasking application, and an icon.

11. The method of claim 10, wherein content for each tile comprises content selected from dynamic application data obtained by the corresponding multitasking application, and an icon.

12. The method of any one of claims 1 to 11, further comprising:
receiving a notification that a multitasking application has been terminated;
removing the corresponding tile from the activity screen; and
re-allocating the remaining tiles according to the layout of the activity screen.

13. The method of any one of claims 1 to 12, further comprising:
receiving an instruction to move one of the plurality of tiles to a different region in the activity screen;
re-allocating that tile to the different region; and
re-allocating remaining tiles to the remaining regions in the layout.

14. A mobile device adapted to implement the method of any one of claims 1 to 12.

15. An electronic device-readable medium bearing code which, when executed by a processor of a mobile device, causes the mobile device to implement the method of any one of claims 1 to 12.

## Amended claims

### Amended claims in accordance with Rule 137(2) EPC.

**1.** A method implemented by a mobile device adapted for application multitasking, the method comprising:
initially displaying an activity screen comprising a plurality of tiles, each tile corresponding to a different multitasking application concurrently executing on the device, each tile being allocated to a distinct one of a plurality of regions defined in a layout for the activity screen, each multitasking application being assigned an index associated with a corresponding region, content for each tile being selected and retrieved for display according to a size of the region to which the tile is allocated;
receiving (1205) notification of a further multitasking application executing concurrently with the different multitasking applications;
assigning (1210) a next available index to the further multitasking application;
allocating a further tile corresponding to the further multitasking application by:
determining whether the index assigned to the further multitasking application exceeds a threshold;
when the index assigned to the further multitasking application does not exceed the threshold, allocating (1250) the further tile to a next available one of the plurality of regions as defined in the layout;
when the index assigned to the further multitasking application exceeds the threshold,
identifying (1235) a region associated with a highest index value having a size greater than a minimum size;
subdividing (1240) the identified region to provide two further regions;
associating (1245) updated positions and sizes with the two further regions and any other regions subsequent to the identified region according to a predefined order; and
allocating the further tile to a last one of the plurality of regions according to the predefined order; and
retrieving (1255) content for display for each of the regions having an updated size and the further tile, the content being selected for retrieval according to size of the corresponding region; and
updating the display of the activity screen to include the further tile.

**2.** The method of claim 1, wherein at least one of the plurality of tiles includes dynamic application data obtained by the corresponding multitasking application.

**3.** The method of claim 2, further comprising:
receiving updated dynamic application data for the at least one of the plurality of tiles;
updating the at least one of the plurality of tiles with the updated dynamic application data; and
updating the display of the activity screen to include the updated dynamic application data.

**4.** The method of claim 3, wherein the updated dynamic application data is received from a notification delivered by the multitasking application corresponding to the at least one of the plurality of tiles.

**5.** The method of any one of claims 1 to 3, wherein the activity screen is comprised in a homescreen display on the mobile device.

**6.** The method of claim 4, wherein the homescreen display further comprises at least one screen including a plurality of icons for launching corresponding applications.

**7.** The method of any one of claims 1 to 6, wherein content for each tile comprises content selected from: a snapshot of the multitasking application as last displayed on the mobile device, dynamic application data obtained by the corresponding multitasking application, and an icon.

**8.** The method of claim 7, wherein content for each tile comprises content selected from dynamic application data obtained by the corresponding multitasking application, and an icon.

**9.** The method of any one of claims 1 to 8, further comprising:
receiving a notification that a multitasking application has been terminated;
removing the corresponding tile from the activity screen; and
re-allocating the remaining tiles according to the layout of the activity screen.

**10.** The method of any one of claims 1 to 9, further comprising:
receiving an instruction to move one of the plurality of tiles to a different region in the activity screen;
re-allocating that tile to the different region; and
re-allocating remaining tiles to the remaining regions in the layout.

**11.** The method of any one of claims 1 to 10, wherein receiving the notification of the further multitasking application comprises receiving a notification of a launch of the further multitasking application.

**12.** The method of claim 11, wherein the notification comprises an application identifier and a pointer to content for the further tile.

**13.** A mobile device adapted to implement the method of any one of claims 1 to 12.

**14.** An electronic device-readable medium bearing code which, when executed by a processor of a mobile device, causes the mobile device to implement the method of any one of claims 1 to 12.
